# EUROPEAN PATENT APPLICATION

(11) **EP 0 939 091 A1**
(43) Date of publication of application: **01.09.1999**
(21) Application number: 99103861.3
(22) Date of filing: 01.03.1999
(51) Int. Cl.: C08G 18/08, C08G 18/32, C09D 175/02

(54) **An extremely fast curing chemical reactive coating composition, which may cure at ambient or low temperatures, with long useable pot life**

(30) Priority: 27.02.1998 US 32452
(71) Applicant: BASF CORPORATION, Mount Olive, New Jersey 07828-1234 (US)
(72) Inventor: Laginess, Thomas J., Lambertville, Michigan 48144 (US); Mormile, Patrick J., Bowling Green, Ohio 43402 (US); Thieben, Lawrence E., Waterville, Ohio 43566 (US)
(74) Representative: Fitzner, Uwe, Dr.

(57) **Abstract**

Extremely fast reacting coating compositions are disclosed. The compositions disclosed are based on amine functional compounds, isocyanates and diluent solvents. The compositions can be cured at ambient conditions or can be cured by baking.

## Description

### BACKGROUND OF THE INVENTION

The present invention relates to an extremely fast reacting coating composition based on amine functional compounds, hydroxyl functional compounds, isocyanates, and diluent solvents. This coating composition can be cured at ambient conditions or can be cured by baking. The coating can also include additional compounds or additives such as UV absorbers, stabilizers, wetting agents, flow additives, defoamers, etc. The coating composition is especially useful for the automotive refinish market where low temperature cure is essential and relatively long pot life is needed.

### Description of Prior Art

Polyurethane systems have been widely used for many years in the coatings industry. These systems may contain hydroxyl functional polyols which react with isocyanates to form polyurethanes with excellent film properties including durability, toughness, and solvent resistance. These systems have been popular for automotive coatings, especially automotive refinish, due to the slow rate of the reaction between the polyol and the isocyanate thus providing a long pot life. (Pot life is the time period after mixing a paint sample with catalyst during which viscosity is still low enough to allow it to be sprayed.) Unfortunately polyurethane coatings take a long time to dry. The reaction rate of polyol with isocyanate can be increased by the addition of an organotin catalyst, but when the catalyst is added, both pot life and dry time decrease. Alternatively, fast reacting resins having amine functionality have been added to these coating systems to speed up the cure time. However, these amine functional compounds also decrease the pot life and can not be used in the refinish market with conventional spray equipment. Special mixing equipment would be needed to mix the compounds just before application.

The present invention uses diluent solvents which slow down the reaction or interaction of the coating during storage, but does not slow down the reaction after the coating film is applied.

The coatings industry is faced with the challenge of reducing Volatile Organic Compounds (VOC) in coating compositions. For this reason it is difficult to add large amounts of diluent solvent and still be within the required limits of VOC. However, in accordance with the U.S. Environmental Protection Agency Standard, certain solvents are now exempt from the VOC calculation and these solvents can be used as the diluent solvent without affecting the VOC. These solvents include acetone, as well as other well known solvents, and have an atmospheric reactivity of less than 0.1cm³/g/s.

Lower VOC can be achieved by using amine functional compounds, hydroxyl functional compounds, isocyanates and diluent solvents being exempt from the VOC calculations.

The following patents demonstrate the speed of the reaction between amines and hydroxyl functional compounds when being catalyzed with isocyanates:

U.S. Pat. No. 5,126,170 describes a coating composition based on a two component system, consisting of a polyisocyanate component and an isocyanate-reactive component containing secondary polyamines. The use of this coating leads to fast dry times, but inadequate pot life, i.e. the viscosity of the system increases too rapidly prior to application of the coating.

U.S. Pat. No. 5,243,012 uses similar chemistry as the above mentioned patent, but provides longer pot life without significantly increasing the dry time of the coating composition by the use of a tin catalyst.

Contrary to the patent referred to above, the addition of tin to the present invention catalyzes the reaction, making the pot life shorter.

Neither of these patents suggest the addition of diluent solvents to increase the pot life of the coating composition

### SUMMARY OF THE INVENTION

The present invention relates to the use of an extremely fast drying, low temperature cure coating composition which utilizes diluent solvents to slow the reaction or interaction of fast reacting compounds, thus increasing pot life. This coating composition is especially suitable for the automotive refinish industry where low temperature cure, fast dry times, and long pot lifes are needed. This coating can be cured under ambient conditions or can be cured by baking.

The coating composition comprises
a) at least one amine functional compound,
b) at least one hydroxyl functional compound,
c) at least one isocyanate compound and
d) one or more diluent solvent(s).

The coating composition can be low in volatile organic content (VOC), but is not limited to low VOC compositions. The invention also may optionally use catalysts to accelerate the reaction rate of the amine and hydroxyl functional compounds with isocyanate compounds. The catalysts used in this invention include organotin compounds, aromatic or aliphatic carboxylic acids and arylsulfonic acids.

### DETAILED DESCRIPTION OF THE INVENTION

The coating composition comprises
a) at least one amine functional compound,
b) at least one hydroxyl functional compound,
c) at least one isocyanate compound and
d) one or more diluent solvent(s).

The amine functional compounds a) preferred in this invention correspond to the formula: 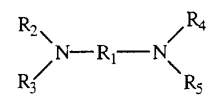 wherein
R1 is an aliphatic, aromatic, cycloaliphatic or arylaliphatic C2 - C18 functional group, which may be a saturated or unsaturated, and which may also contain oxygen, nitrogen and sulfur.
R2, R3, R4 and R5 are identical or different substituents, which may be -H, or alkyl, aryl, cycloaliphatic, aromatic or substituted alkyl, aryl, or cycloaliphatic group, or heterocyclic group.

Useful amine functional compounds which are added to the coating composition are those compounds that require little or no solvent. In addition to this, they possess at least one active amino hydrogen, thereby allowing them to become crosslinked with the coating matrix. These factors lead to an effective solids increase in the coating composition, thus lowering VOC also. Preferred amine functional compounds are those having a viscosity of 1.5 Pa s or less at 100% non-volatile. These would contain at least two active amino hydrogens, allowing them to become part of the crosslink matrix in a continuous scheme. This type of compound would most likely be a reaction product from a nucleophilic addition of one mole of a di-primary amine with two moles of a mono-unsaturated reactant. A compound of this type for example, is a reaction product of one mole of 4,4'-Methylenebiscyclohexanamine with two moles of diethyl maleate.

The preferred amine functional compounds a) include cycloaliphatic diamine compounds having the following structures:

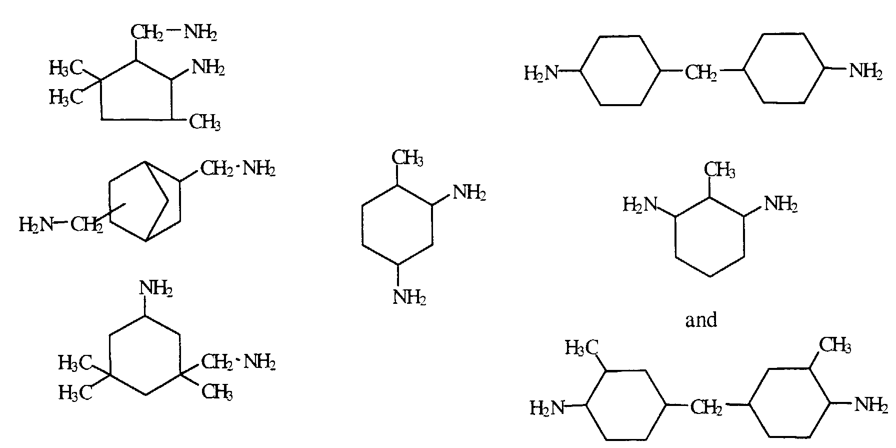

Useful hydroxyl functional compounds b), are polymers which have at least one hydroxyl group contained in the backbone. These polymers would have a composition which would have a sprayable solution viscosity at the solids content required to transfer a suitable amount of compound to the intended substrate. These polymers may comprise acrylic, polyester, alkyd/acrylic, polyether or other constituent compounds known to the art.

Useful isocyanates c), are di- or polyisocyanates which are aliphatic, cycloaliphatic, or aromatic. Such isocyanates include hexamethylene diisocyanate, 1-methyl-2,4-diisocyanatocyclohexane, isophorone diisocyanate, 4,4-diisocyanatodicyclohexyl methane, toluene-2,4-diisocyanate, o-, m-, and p-xylene diisocyanate, 1,5-naphthalene diisocyanate, masked isocyanates or mixtures thereof. It is also possible to use polyisocyanates with isocyanurates, allophanate, biuret or uretdione structures. Furthermore oxadiazenetriones and isocyanate functional prepolymers may be employed. The polyisocyanates may optionally be reacted with a deficit of polyhydroxy compounds, such as water, glycols, polyalkylene glycols, neopentyl glycols, glycerol, trimethylol propane, hexane triol, or alkyd resins, before being used.

Useful diluent solvents d), are ketones, aldehydes, esters, acetates, ethers, aromatic hydrocarbons, aliphatic hydrocarbons, alcohols, glycols, chlorinated solvents, and naphthalenes.

This invention also describes a method for reducing the volatile organic content (VOC) of a paint composition, by utilizing exempt solvents as the diluent solvent without adversely affecting the application, durability or performance of the composition.

The invention also relates to optionally using catalysts to accelerate the reaction rate of the amine and hydroxyl functional compounds. The catalysts used in this invention include organotin compounds, aromatic or aliphatic carboxylic acids or arylsulfonic acids. The preferred catalysts are organotin compounds. Coating compositions described by the present invention find utility in application of ambient film forming and curing such as automotive refinish coatings. The coatings applied in this manner may be used as clear-coats or may be used pigmented. It is also suggested that the present invention applies to coatings to be force dried or baked to accelerate the coating curing process. Forced dry conditions range from 38°C (100°F) to over 163°C (325°F). The coating cure process for the present invention may also be accelerated by the utilization of radiant heating or Infra Red emitting devices known to the art.

The following examples are intended to illustrate the invention. All quantities are shown on a weight basis unless otherwise indicated.

In the examples listed herein, the components were comprised of a cycloaliphatic diamine, hydroxyl functional acrylic resins and isocyanate functional compounds. In each of these examples a defoamer (BYK 141 from Byk Chemie), two surface additives (BYK 344 from Byk Chemie, and SF-69 silicon from Dow Corning), an ultraviolet absorber (Tinuvin 384 from Ciba) and a hindered amine light stabilizer (Tinuvin 282 from Ciba) are used. The diluent solvents used are usually ketones and/or acetates.

### EXAMPLES 1, 2, 3, 4, and 5

The following examples given in Table 1 help to prove the reactivity of the compounds and the rapidity of the cure. These examples also prove the fact that additional solvents slow down the reaction time in a container, but don't affect the dry times of the films or film properties.

COMPONENT 1 is a cycloaliphatic diamine formed from the reaction of one mole of 4,4-methylenebiscyclohexanamine with 2 moles of diethyl maleate, producing a 100% solids resin.

COMPONENT 2 is a high molecular weight, high glass transition temperature (Tg), hydroxyl functional acrylic resin which has a solid content of 50-60%.

COMPONENT 3 is a high molecular weight, high Tg, hydroxyl functional acrylic resin which has a solid content of 40-50%.

SOLVENT 1 is a blend of acetates, aromatic hydrocarbons and naphtha.

HARDENER 1 is a hardener of hexamethylene diisocyanate trimer having a solid content of 60%.

HARDENER 2 is a hardener of hexamethylene diisocyanate trimer having a solid content of 35%.

**TABLE 1**

| Compounds: | Example 1 | Example 2 | Example 3 | Example 4 | Example 5 |
|---|---|---|---|---|---|
| Component 1 | 31,9 | 34,3 | 38,5 | 27,0 | 20,3 |
| Component 2 | 58,0 | 31,1 | 23,3 | 16,4 | 12,3 |
| Component 3 | --- | 34,3 | 25,6 | 18,0 | 13,5 |
| Additives | 5,4 | 5,8 | 5,5 | 3,9 | 2,9 |
| Solvent 1 | 23,6 | 22,3 | 26,7 | 21,1 | 22,2 |
| Hardener 1 | 68,8 | 68,8 | 68,8 | 49,2 | --- |
| Hardener 2 | --- | --- | --- | --- | 72,4 |

| Properties: | | | | | |
|---|---|---|---|---|---|
| Wt. solvent (theo.) [%] | 42,5 | 42,6 | 42,5 | 47,5 | 58,2 |
| VOC (theo.) [kg/m³] ([#/gal]) | 431,4 3,6 | 431,4 3,6 | 431,4 3,6 | 467,3 3,9 | 563,2 4,7 |
| Initial viscosity [s] | 18,0 | 19,0 | 16,0 | 14,0 | 11,0 |
| 15 min. viscosity [s] | 32,2 | 44,0 | 30,0 | 18,0 | 12,4 |
| 30 min. viscosity [s] | --- | --- | --- | 33,2 | 13,2 |
| 60 min. viscosity [s] | --- | --- | --- | --- | 17,0 |

| BK Dry Recorder: | | | | | |
|---|---|---|---|---|---|
| Phase 1 [min] | 10 | 5 | 15 | 5 | 5 |
| Phase 2 [min] | 35 | 30 | 30 | 15 | 15 |
| Phase 3 [min] | 60 | 45 | 40 | 20 | 25 |
| Phase 4 [min] | 95 | 80 | 60 | 55 | 45 |

| Pendulum Hardness: | | | | | |
|---|---|---|---|---|---|
| 5 hours [rocks] | --- | --- | --- | --- | 35 |
| 1 day [rocks] | 50 | 54 | 57 | 71 | --- |
| 7 days [rocks] | 75 | 86 | 86 | --- | --- |

The Wt. solvent is the amount of solvent in the total mixed compound given in per cent.

VOC is the Volatile Organic Content as measured by the ASTM test designation D 3960.

Initial viscosity is the viscosity of the composition measured immediately after mixing. The viscosity is measured in seconds on a Ford #4 viscosity cup at 25°C. 15 minutes viscosity is the viscosity of the composition 15 minutes after the initial mixing. 30 minutes viscosity is the viscosity of the composition 30 minutes after the initial mixing. 60 minutes viscosity is the viscosity of the composition 60 minutes after the initial mixing. This viscosity measurement helps to determine the pot life of the sample. For these specific examples, a viscosity of 20 to 25 seconds would be the maximum viscosity of the composition before it couldn't be sprayed to produce a desired film anymore.

The BK Drying Recorder is a film integrity tester. A 50.8 pm (2.0 mil) to 63.5 pm (2.5 mil) (dry) film of paint is spray applied to a 2.54 cm (1") by 30.48 cm (12") glass slide. The slide is immediately placed into the tester and testing is started. The tester pulls a 1.5 mm round end rod (held vertically) across the surface of the paint film at a consistent rate so the mark left on the film can be analyzed and the time that the nature of the mark changes can be recorded. Phase 1 is the time when the paint film has set enough that the paint does not reflow together behind the rod after its passage. Phase 2 is the time when the film has set enough that the rod will ride on top of the paint film instead of being pulled through the film. Phase 3 is the time when the rod no longer leaves a visible mark on the film as it is pulled across the film. Phase 4 is the time when the rod has no effect on the film at all and the film is fully cured.

The Pendulum Hardness tester consists a steel bar capable of oscillating on two hardened steel hemispheres fixed to the underside of the bar. A panel is held level in a suitable clamp above bench level and the pendulum bar is placed upon the surface to be tested with the steel hemispheres in contact with the panel. The pendulum is allowed to swing, measuring a "damping effect" and the time taken (in number of swings), for the decrease from full amplitude of the swing to a deflection of half amplitude (6° to 3°) is taken as the pendulum hardness (Koenig).

From these results, the use of Hardener 2 (example 5) improved the pot life time tremendously. This hardener had more solvent so this extra solvent slowed down the reaction in the pot. The VOC increase was only 131,8 kg/m³ (1,1 #/gal), but provided an additional 60 minutes of pot life to spray the composition. The dry time of the film was not affected by the increase in solvent content. Example 4 also shows the affect of additional solvent. In this example the solvent content is increased by only 5% but the pot life doubled. The dry time was not affected by this 5% increase in diluent solvent.

### EXAMPLES 6, 7, and 8

The following examples given in Table 2 show the effects of the additional solvent on the reactivity of the isocyanate. In these examples the additional solvent effect is different depending on the isocyanate (hardener) used.

SOLVENT 2 is an acetate solvent which has an atmospheric reactivity less than ethane as has negligible photochemical reactivity.

HARDENER 3 is a 37% solids hardener of Hexamethylene diisocyanate biuret.

**TABLE 2**

| Compounds: | Example 6 | Example 7 | Example 8 |
|---|---|---|---|
| Component 1 | 19,5 | 19,5 | 26,0 |
| Component 2 | 11,8 | 11,8 | 15,7 |
| Component 3 | 13,0 | 13,0 | 17,3 |
| Additives | 2,8 | 2,8 | 3,7 |
| Solvent 1 | 135, | 13,5 | 18,0 |
| Solvent 2 | 11,6 | 11,6 | 15,5 |
| Hardener 1 | --- | --- | 49,2 |
| Hardener 2 | --- | 72,4 | --- |
| Hardener 3 | 72,2 | --- | --- |

| Properties: | | | |
|---|---|---|---|
| Wt. solvent (theo.) [%] | 58,1 | 59,5 | 49,2 |
| VOC (theo.) [kg/m³] | 563,2 | 575,2 | 479,3 |
| ([#/gal]) | 4,7 | 4,8 | 4,0 |
| Initial viscosity [s] | 11,6 | 11,2 | 13,4 |
| 15 min viscosity [s] | --- | --- | 17,0 |
| 30 min viscosity [s] | 14,8 | 12,6 | 25,5 |
| 60 min viscosity [s] | 20,8 | 14,4 | --- |
| 120 min viscosity [s] | 76,0 | 24,0 | gelled |

| BK Dry Recorder: | | | |
|---|---|---|---|
| Phase 1 [min] | 5 | 10 | 10 |
| Phase 2 [min] | 15 | 20 | 20 |
| Phase 3 [min] | 25 | 30 | 30 |
| Phase 4 [min] | 45 | 45 | 50 |

| Pendulum Hardness: | | | |
|---|---|---|---|
| 2 hours [rocks] | 25 | 20 | 23 |

These examples demonstrate how the reduction with solvent slows down the reaction tremendously. The composition of example 8 shows a very short pot life and gelled within 2 hours. However example 6 and 7 both have a little more solvent added to the samples, yet show a much longer pot life. The additional solvent had no effect on the dry time of the coating films, as seen with the drying properties of the films in the dry recorder. The diluent solvent gives extended pot lifes without longer cure.

### EXAMPLES 9, 10, 11, and 12

The following examples given in Table 3 demonstrate the effect of adding diluent solvents to the same sample and the effect of this additional solvent on the pot life.

DILUENT SOLVENT 1 is a blend of acetates and aromatic hydrocarbons.

**TABLE 3**

| Compounds: | Example 9 | Example 10 | Example 11 | Example 12 |
|---|---|---|---|---|
| Component 1 | 23,4 | 23,4 | 23,4 | 23,4 |
| Component 2 | 14,1 | 14,1 | 14,1 | 14,1 |
| Component 3 | 15,6 | 15,6 | 15,6 | 15,6 |
| Additives | 3,3 | 3,3 | 3,3 | 3,3 |
| Solvent 1 | 21,0 | 21,0 | 21,0 | 21,0 |
| Solvent 2 | 9,2 | 9,2 | 9,2 | 9,2 |
| Hardener 1 | 44,2 | 44,2 | 44,2 | 44,2 |
| Diluent Solvent 1 | 8,0 | 16,0 | 24,0 | 40,0 |

| Properties: | | | | |
|---|---|---|---|---|
| Wt. solvent (theo.) [%] | 42,3 | 45,3 | 48,1 | 61,0 |
| VOC (theo.) [kg/m³] | 467,3 | 491,3 | 515,3 | 551,2 |
| ([#/gal]) | 3,9 | 4,1 | 4,3 | 4,6 |
| Initial viscosity [s] | 12,6 | 12,0 | 11,6 | 11,0 |
| 15 min viscosity [s] | 14,8 | 14,0 | 12,8 | 11,6 |
| 30 min viscosity [s] | 18,2 | 15,6 | 13,8 | 12,4 |
| 45 min viscosity [s] | 25,6 | 19,0 | 15,4 | 12,8 |
| 60 min viscosity [s] | 40,4 | 24,8 | 18,2 | 13,8 |
| 75 min viscosity [s] | --- | --- | 22,6 | 15,0 |

Initial viscosity is the viscosity of the compound immediately after mixing. 15 minute viscosity is the viscosity of the compound 15 minutes after the initial mixing. 30 minute viscosity is the viscosity of the compound 30 minutes after the initial mixing. 45 minute viscosity is the viscosity of the compound 45 minutes after the initial mixing. 60 minute viscosity is the viscosity of the compound 60 minutes after the initial mixing. 75 minute viscosity is the viscosity of the compound 75 minutes after the initial mixing. This viscosity measurement helps to determine the pot life of the sample. For these specific examples, a viscosity of 20 to 25 seconds would be the maximum viscosity of the composition before it couldn't be sprayed to produce a desired film.

These examples proved that by adding the diluent solvent, the reactivity in the container decreases dramatically with the amount of diluent solvent which is added.

### EXAMPLES 13, 14, and 15

The following examples, found in Table 4, demonstrate the effects of the addition of an organotin catalyst and the effect of removing the hydroxyl functional compound completely.

SOLVENT 3 is a blend of acetates and ketones.

DILUENT SOLVENT 2 is a ketone solvent which has an atmospheric reactivity less than ethane as has negligible photochemical reactivity and is classified as exempt.

DILUENT SOLVENT 3 is a blend of acetates and ketones.

CATALYST SOLUTION 1 is a 2% solution of an organotin compound in a ketone solvent.

**TABLE 4**

| Compounds: | Example 13 | Example 14 | Example 15 |
|---|---|---|---|
| Component 1 | 30,6 | 30,6 | 40,7 |
| Component 2 | 18,6 | 18,6 | --- |
| Component 3 | 20,4 | 20,4 | --- |
| Additives | 4,4 | 4,4 | 3,5 |
| Solvent 3 | 12,0 | 12,0 | 24,4 |
| Diluent solvent 2 | 24,6 | 24,6 | 19,7 |
| Catalyst solution 1 | --- | 1,8 | 1,4 |
| Diluent solvent 3 | 10,0 | 10,0 | 12,1 |
| Hardener 1 | 59,0 | 59,0 | 63,9 |

| Properties: | | | |
|---|---|---|---|
| Wt. solvent (theo.) [%] | 50,6 | 51,1 | 51,2 |
| VOC (theo.) [kg/m³] | 419,4 | 419,4 | 419,4 |
| ([#/gal]) | 3,5 | 3,5 | 3,5 |
| Initial viscosity [s] | 12,2 | 12,2 | 11,0 |
| 30 min viscosity [s] | 17,0 | 17,0 | 13,0 |
| 60 min viscosity [s] | 28,0 | 34,0 | 15,8 |

| BK Dry Recorder | | | |
|---|---|---|---|
| Phase 1 [min] | 10 | 15 | 15 |
| Phase 2 [min] | 35 | 30 | 35 |
| Phase 3 [min] | 50 | 45 | 50 |
| Phase 4 [min] | 100 | 90 | 125 |

| Pendulum Hardness | | | |
|---|---|---|---|
| 2 hours [rocks] | 16 | 12 | 39 |
| 3 hours [rocks] | 21 | 20 | 74 |
| 5 hours [rocks] | 24 | 27 | 83 |
| 5 days [rocks] | 72 | 74 | 115 |

From these results it is obvious that the addition of the organotin catalyst improved the dry time slightly but also shortened the pot life. Also, the addition of diluent solvent 2 lowers the VOC, due to the solvent being exempt from measurement of VOC. The results also show the effect of removing the hydroxyl functional compound and only using the cycloaliphatic diamine. The pot life is even longer with only the cycloaliphatic diamine in the sample and the film hardness is much higher. However, the Phase 4 dry of this composition on the dry recorder is longer but it is very hard once the cure is complete as proven by the pendulum hardness.

## Claims

1. A coating composition comprising
a) at least one amine functional compound,
b) at least one hydroxyl functional compound,
c) at least one isocyanate compound, and
d) at least one diluent solvent.

2. The composition according to claim 1 wherein the amine functional compound a) is selected from the group consisting of aliphatic, aromatic and cycloaliphatic diamines and mixtures thereof.

3. The coating composition according to claim 2 wherein the amine functional compound a) is a reaction product of one mole of 4,4'-Methylenebiscyclohexanamine with two moles of diethyl maleate.

4. The composition according to anyone of the claims 1 to 3 wherein the isocyanate c) is selected from the group consisting of from aliphatic, aromatic and cycloaliphatic isocyanates, masked isocyanates, isocyanates with isocyanurate, biuret, allophanate, oxadiazenetrioneand uretdione structures, and isocyanate functional prepolymers and mixtures thereof.

5. The composition according to anyone of the claims 1 to 4 wherein the diluent solvent(s) d) are selected from the group consisting of ketones, aldehydes, esters, acetates, ethers, aromatic hydrocarbons, aliphatic hydrocarbons, alcohols, glycols, chlorinated solvents, naphthalenes and mixtures thereof.

6. The composition according to anyone of the claims 1 to 5 wherein the diluent solvent is a solvent or a mixture of solvents which is classified as exempt solvent(s) for Volatile Organic Content (VOC) calculation.

7. The coating composition according to anyone of the claims 1 to 6 which is cured at ambient temperature.

8. The coating composition according to anyone of the claims 1 to 6 which is baked to cure.

9. The use of the coating composition according to anyone of the claims 1 to 8 for preparing a clear coat.

10. A cured clear coat prepared from a coating composition in accordance with anyone of the claims 1 to 8.

11. A method of increasing the pot life of a coating composition comprising forming a coating composition by mixing
a) at least one amine functional compound,
b) at least one hydroxyl functional compound,
c) at least one isocyanate compound, and
d) at least one diluent solvent.
